# EUROPEAN PATENT APPLICATION

(11) **EP 4 645 890 A1**
(43) Date of publication of application: **05.11.2025**
(21) Application number: 24173243.7
(22) Date of filing: 30.04.2024
(51) Int. Cl.: H04N 23/81, H04N 23/74, H04N 23/56

(54) **METHOD FOR RELATIVE CONTROL OF A LIGHT SOURCE AND A CAMERA MODULE**

(71) Applicant: DTEC GmbH, 61191 Rosbach v.d. Höhe (DE)
(72) Inventor: ZHANG, Yu, 61440 Oberursel (DE); PENG, Chaoyong, 61440 Oberursel (DE); XIE, Liming, 61348 Bad Homburg v.d. Höhe (DE); GUO, Jianguang, 61352 Bad Homburg v.d. Höhe (DE); ZHANG, Zhaoyuan, 61169 Friedberg (Hessen) (DE)
(74) Representative: Keil & Schaafhausen Patentanwälte PartGmbB

(57) **Abstract**

The present invention relates to a method for relative control of at least one interval-controlled light source (10, 11) and at least one camera (8, 9) together forming a camera module (1). The method of the present invention allows to improve image capturing in outdoor environments, especially by eliminating influence of ambient light components. The method therefore comprises the following steps: exposing an object to ambient light; switching the at least one light source (10, 11) in an on-state for a first time interval (t1, t1.1) in which the at least one light source (10, 11) emits light onto the object; capturing a first image (11, 11.1) of the object by the at least one camera (8, 9), wherein the first image (11, 11.1) is captured in the first time interval (t1, t1.1) in which the object is exposed to the light of the light source (10, 11) and ambient light, switching the at least one light source (10, 11) in an off-state for a second time interval (t2, t2.1) in which the at least one light source (10, 11) emits no light onto the object; capturing a second image (I2, 12.1) of the object by the at least one camera (8, 9), wherein the second image (I2, 12.1) is captured in the second time in-terval (t2, t2.1) in which the object is exposed to ambient light only, processing the first image (11, 11.1) and the second image (I2, 12.1) by a computing unit thereby generating a decoded third image (I3, 13.1).

## Description

The present invention relates to a method for relative control of a light source and a camera module.

It is generally known to use camera modules, for example camera modules comprising high-precision line scan cameras, for various applications and industries, for example for industrial inspection, for public security or for environmental monitoring etc. Processing and use of images captured by the camera module is influenced primarily by the quality and accuracy of the images. For example, a damage of an object may not be noted based on an image when the quality and accuracy of the image is poor.

When the camera modules are used in an outdoor environment, quality and accuracy of the images captured by the camera module are significantly influenced by ambient light, in particular by daylight. Reflections and overexposure of daylight, for example, when sunlight is coming from behind an object of which an image is to be captured, often leads to a poor quality of the images and increases noise in image data output. Processing and use of these images is therefore often negatively influenced and may lead to wrong decisions, for example during inspection of the object.

Thus, taking above-mentioned disadvantages into consideration, it is an object of the present invention to provide a method for use of a camera module allowing for improved image capturing in outdoor environments.

The object is solved by a method according to claim 1. The method allows for relative control of at least one interval-controlled light source and at least one camera together forming part of a camera module. The at least one camera of the camera module is configured to capture images by an image sensor. In addition, the at least one light source is configured to irradiate an object of which an image may be captured. In other words, the at least one light source is configured to irradiate an object when an image of the object is captured by a camera of the camera module and thus the at least one light source emits light onto the object.

The camera module may comprise a housing in which the at least one light source and the at least one camera are arranged. The at least one light source and the at least one camera may be controlled by a control unit which may for example also be arranged inside the housing. The housing may comprise two housing components, for example an upper housing part and a lower housing part which may be coupled by bolts. The housing parts may be sealed, for example by a rubber sealing strip. Further, the housing may comprise an opening, such as a window, through which the light from the light source may exit the housing and through which light, such as ambient light and light from the light source reflected from the object, may enter for image capturing by the camera. The at least one light source and the at least one camera may comprise means for adjustment such as screws, adjustment knobs, adjustment heads, springs etc. By using means of adjustment, the light source may be aligned to a target area of the corresponding camera by adjusting the mechanism. The target area may define an area of an object, a part of an object, for example a train wheel or a wheelset of a train, or a scenery from which the camera may take an image. The adjustment means may thus allow to adjust the light source in order to provide sufficient lighting of the target area. In order to assist relative adjustment of the at least one light source and the at least one camera, the at least one light source and the at least one camera may be arranged on a plane. The plane may be provided by a plate. Alternatively, the at least one light source and the at least one camera may be arranged on a circuit board assembly.

The camera module may comprise more than one camera and/or more than one light source. For example, the camera module may comprise two cameras and two light sources. Each light source may be calibrated, i.e. in other words aligned or adjusted, to support one camera in capturing images by irradiating the object. The two light sources and one of the two cameras may be arranged along a common axis.

The camera module may further comprise connections that allow the camera module to be electrically connected to external components. For example, the camera module may be connected to a control unit and/or a computing unit and/or other units such as displays, storage units or the like. Image data captured by the image sensor of the camera may be processed by the computing unit. The control unit may provide a control signal to control the at least one camera and the at least one light source.

A suitable camera to be used as part of the camera module may for example be a Linea GigE monochrome CMOS line scan camera or the Ranger3 model from SICK AG.

The at least one light source of the camera module is interval-controlled and is configured to be switched in a first time interval in an on-state, in which the at least one light source emits light, and in a second time interval in an off-state, in which the at least one light source emits no light. Hence, an object of which an image is to be captured may be irradiated by the at least one light source emitting light in the on-state. However, the object may not be irradiated when the at least one light source is in the off-state.

The method according to the invention, which is used to improve image capturing, especially image capturing in outdoor environments with changing and uncontrollable light conditions, comprises one step in which an object is exposed to ambient light. In comparison to light provided by the at least one light source, ambient light is not controlled or focused onto the object. For example, ambient light may be daylight, i.e. sunlight. Ambient light may also be partially supplemented by scattered light from light sources that are not controlled by the control unit controlling the camera module, such as lights on a platform of a train station, lights along train tracks, etc. The first step does not necessarily require that the object is actively exposed to ambient light. For example, one may not necessarily take the object and place it in an outdoor environment as the object may already be in an outdoor environment. However, the object of which an image is to be captured, i.e. the object of interest, has to be in an outdoor environment and therefore exposed to ambient light. The object may consist of several different components or may be a single component. In general, the object exposed to ambient light is the object of interest that is to be captured with the camera module.

Further, the method comprises one step in which the at least one light source is switched in the on-state for the first time interval in which the at least one light source emits light onto the object. In other words, the object is irradiated by the at least one light source, when the at least one light source is in the on-state.

In one step of the method, a first image of the object is captured by the at least one camera in the first time interval in which the object is exposed to the light of the at least one light source and ambient light. Therefore, the first image is captured by an image sensor of the camera detecting both the light of the at least one light source as well as ambient light.

Further, in one step of the method, the at least one light source is switched in the off-state for the second time interval in which the at least one light source emits no light onto the object. In other words, the object is not irradiated by the at least one light source, when the at least one light source is in the off-state. However, the object is still exposed and therefore irradiated by ambient light. In this second time interval, in which the object is exposed to ambient light only, a second image of the object is captured by the at least one camera.

In summary, two images are captured of which a first image is captured when the object is irradiated by light from at least one light source and ambient light and of which a second image is captured when the object is only irradiated by ambient light. Whether the first image or the second image is captured first, i.e. whether an image with exposure by the at least one light source and ambient light or only with exposure by ambient light is captured first, is irrelevant for the invention. However, in order to show an effect during a subsequent processing of the first image and the second image and in order to generate a decoded third image, the object should be exposed to ambient light before switching the at least one light source and before capturing the first image and the second image. In other words, the sequence of steps regarding switching the at least one light source first to the on-state and capturing a respective first image or switching the at least one light source first to the off-state and capturing a respective second image are both possible.

Processing of the first image and the second image is performed by a computing unit. A third image is generated during processing of the first image and the second image. The computing unit may be an external computing unit and may be electrically connected to the connections of the camera module. Processing of the first image and the second image may comprise recognition and evaluation of image differences. The image differences may comprise differences in lighting intensity. The third image which is generated as a result of the processing by the computing unit may thus show an image of the object comprising a higher quality and accuracy compared to the first image and the second image.

According to one embodiment, the at least one light source may be a laser light source or an LED. Using a laser light source may increase accuracy of the method, as the light from the laser light source may be easier to control and there may be fewer errors. In addition, using lasers may be more energy efficient and may avoid the problem of heat dissipation from the light source.

According to one embodiment, the first time interval and the second time interval may be consecutive. In other words, the at least one light source may be directly switched from the on-state in the off-state and vice versa. Consequently, the at least one camera may thus capture an image either when the at least one light source is in the on-state or in the off-state. Therefore, for example, there may be no first time interval, in which the at least on light source is switched in the on-state, following another first time interval. Further, after the second time interval, a next first time interval may follow in which the at least one light source is again switched in the on-state. Hence, there may be no time discrepancy between the first time interval and the second time interval and the time sequence of the first image and the second image as well as their time offset may only depend on the length of the respective time interval as well as a point in time within the respective time interval at which the image may be captured.

In a further embodiment, a time offset between the first image and the second image may be determined such that an image offset between the first image of the object and the second image of the object may be within one pixel. Considering an object that is not moving relative to the camera module during image capturing, there is no image offset. This means that one pixel position of the object in a first image has the same pixel position in a second image. However, if the object moves relative to the camera module and consequently shifts relative to the camera module in comparison between capturing the first image and capturing the second image, this image offset is within one pixel. This means that the image offset can be one pixel or less. In other words, a pixel of a squared second image having a pixel position, first row and second column, and showing a portion of an object, may correspond to a pixel of a squared first image having a pixel position, first row and first column, and showing the same portion of the object as the pixel of the second image. However, the method is typically used to capture moving objects so that the at least one camera captures an image every time the object is relatively moved to the camera module, wherein however the relative movement is not more than one pixel. Considering pixel sizes of about only a few micrometers (µm) and movement speeds of an object of about a few kilometers per hour (km/h), this means that two images are captured with only a short time offset. Accordingly, the lower a resolution of a selected camera the higher a sampling speed that may be achieved. At a resolution that satisfies the case of a railway application, the selected camera may, for example, achieve a speed of 100 km/h. Thus, this may guarantee that a change in light of ambient light, for example, a change in daylight, between a point in time in which the first image may be captured and in which the second image may be captured is very small. This means that ambient light exposure of the object is almost identical in the first image and the second image. The point in time in which the respective image is captured within a corresponding time interval may be identical or may be different. For example, the first image may be captured closer to the end of the first time interval, wherein the second image may be captured closer to the beginning of the second time interval.

The time offset may thus define a time interval between a pair for images. In other words, the time offset may define a time interval between a first and a corresponding second image, i.e. between two images which are processed later on in order to generate the third image. For a first pair of images, i.e. a first, first image and a first, second image, a time offset may be a "first time offset", wherein for a second pair of images, i.e. a second, first image and a second, second image, a time offset may be a "second time offset". In one embodiment, the first time offset may comprise the same duration as a second time offset. Therefore, a duration of the first time offset at least equals a duration of the second time offset. Further, the first time interval may comprise a duration which at least equals an exposure time of the at least one camera when taking the first image, and wherein the second time interval comprises a duration which at least equals an exposure time of the at least one camera when taking the second image. The exposure time of the at least one camera may only be a few microseconds (µs). The exposure time may be fixed after completing camera calibration or camera setup. That means, that an exposure time may be chosen depending on the resolution and the relative speed between the camera module and the object, i.e. the target. After setup the time offset between the first image and the second image may be the same. However, in one aspect, the duration of the time intervals may also be different. In addition, the point in time in which the respective image is captured within the corresponding time interval may be identical. This may simplify control of the at least one light source and the at least one camera. Further, the duration of the time intervals in which the light source is switched in the on-state or the off-state may be set according a function of a triggering speed of the camera.

According to one embodiment, the camera module may comprise a 2D-camera, e.g., a line scan camera, and/or a 3D-camera. A complete image of the object may thus be created by relative movement between the 2D-camera, e.g., the line scan camera, and the object, wherein, for example, the image sensor also known as line scan sensor may be triggered again after relative movement of the line scan camera and the object. Each time the object is moved a corresponding line may be captured. Thus, when the line scan camera may be used according to the method of the invention, the first image and the second image may correspond to lines captured by line scan camera, wherein a first image is followed by a second image and/or vice versa. Considering a complete image, there may for example be an upper line which corresponds to the first image. A next line below the upper line may correspond to the second image. A line below the next line may again correspond to the first image and so on. However, the camera module may also alternatively or additionally comprise a 3D-camera which may capture an image, i.e. a full image or complete image, of the object at once. Compared to a 2D-camera, a pixel of a 3D-camera may additionally comprise depth information on the pixels. The 3D-camera may allow to additionally collect height and shape measurement data. In this regard, the first image may be a first full image of the object at a first point in time and the second image may be a second full image of the object at a second point in time. A corresponding light source may be provided for each camera. Each camera may be configured to capture one first image in the first time interval and one second image in the second time interval. Hence, there may be two first images and two second images. Processing of the first image and the second image captured by the respective camera may then be performed by the computing unit.

In one embodiment, one light source may be provided for each camera of the camera module. For example, there may be a first light source provided for the line scan camera and there may be a second light source provided for the 3D-camera. In other words, there may be a first light source which irradiates the object when the line scan camera captures an image, and wherein the first light source is adjusted or calibrated to the line scan camera. And there may be a second light source which irradiates the object when the 3D-camera captures an image, and wherein the second light source is adjusted or calibrated to the 3D-camera. The light sources may provide light with different wavelength, which may improve quality of the images. Each light source may be configured to be switched in the on-state for a first time interval and in the off-state for a second time interval. The duration of the first time intervals of the two different light sources and/or the duration of the second time intervals of the two different light sources may be different. However, in one aspect, the duration of the time intervals may also be same. Since a triggering speed of each camera may be different, the first time interval and the second time interval of the first light source associated with the line scan camera may differ from the first time interval and the second time interval of the second light source associated with the 3D-camera. Consequently, the cameras may capture images independently which may allow to generate two third images, i.e. one for each camera, by interrelating pixel coordinates of the respective images.

In one embodiment, the object may be part of a train moving past the camera module at a speed of about 100 km/h at its maximum. The speed of the object may thus be for example 100 km/h or less. The object may for example be a train wheel or a wheelset of a train. The camera module may be located at a fixed position on a section of track. However, the method may also be used for objects other than parts of a train. Further, the method may also be used for objects moving past the camera module at a speed higher than 100 km/h. The time intervals may be adapted to the speed of the object. The exposure time of the cameras when capturing the first image and/or the second image may for example be about 20 µs. However, the exposure time may also be different than 20 µs but preferably in a range of only a few microseconds. The time intervals may thus be adapted according to the exposure times. If, for example, the method according to the invention may be used on a section of a track on which the train travels slowly, for example at a speed of about 30 km/h shortly after leaving a station or shortly before entering a station, the time intervals may be selected longer than if the same camera module would be used on a section of a track on which the train travels at a speed of about 100 km/h, for example. In other words, higher speeds of the object relative to the camera module may require shorter time intervals. Conversely, lower speeds of the object relative to the camera module may allow longer time intervals.

According to a further embodiment, the step of processing the first image and the second image by the computing unit to generate the decoded third image may comprise at least partially eliminating light components of the first image by an ambient light component of the second image. The ambient light component eliminated from light components of the first image may thus be an interference light component. The ambient light component of the first image may however only be partially eliminated as the ambient light component of the second image may not be identical to the ambient light component of the first image. However, especially when a time offset between the first image and the second image is short, the ambient light component of the first image is at least substantially eliminated. The light components of the first image may comprise light from the at least one light source and ambient light. Thus, in other words, if the ambient light components of the first image and the second image are almost identical, for example because there is a relatively short time difference between the two images, the ambient light components of the first image may be almost fully eliminated using the ambient light components of the second image, so that the resulting third image at least almost only comprises the light components caused by the exposure of the object to at least one light source. In other words, the resulting third image may at least substantially only comprise a light source light component. To illustrate the effect, for example, the first image may comprise an ambient light component named Le and a light source component named Lc. The second image may only comprise an ambient light component named Le'. Due to the short time difference between the two images, Le may at least be substantially identical to Le', i.e. Le ≈ Le'. However, there may also be situations where for example Le is fully identical to Le'. Therefore, Le' of the second image may be used to at least almost fully eliminate Le of the first image. A generated third image thus may essentially only comprises Lc, i.e. a light source component. In other words, Le', i.e. the ambient light component of the second image, may be subtracted from the combination or sum of Le and Lc, i.e. the light components of the first image, which may essentially result in a pure light source component Lc for the processed third image and thus in an image comprising higher quality and accuracy compared to the first image and the second image. The third image may thus substantially comprise purely a light source component, for example a pure laser-based light source component.

According to a further aspect of the invention, when processing the first image and the second image of the 2D-camera, for example, the line scan camera, which may be performed by the computing unit, the first image may correspond to a first line, for example an upper line of a complete image of the object, and the second image may correspond to a second line, which may for example be below the upper line. Elimination of the light components may thus be performed between two lines captured in succession, i.e. using the corresponding pixels of the different lines. In other words, in order to generate the third image, elimination of the light components of the first image corresponding to the first line may be performed by eliminating the ambient light component of the first image by using the ambient light component of the second image, resulting in the third image at least substantially only comprising a light source component. The generated decoded third image may then for example replace the first image. The third image shows a better quality and accuracy compared to the first image and the second image.

Furthermore, when processing the first image and the second image of the 3D-camera may be performed by the computing unit, elimination of the light components may be performed between two equally positioned pixels of the first image and the second image. In other words, an ambient light component of a first pixel of the first image, for example a pixel in the upper left corner of the first image, may be eliminated by using the ambient light component of a second pixel, for example a pixel in the same position of the second image, i.e. a pixel in the upper left corner of the second image. The resulting pixel, i.e. the pixel resulting from the elimination between the pixel of the first image and the second image, may provide a pixel in the upper left corner of the third image which now at least substantially only comprises a light source component. The principles for image processing of images taken by a 2D-camera or by a 3D-camera are therefore substantially the same. The main difference between the processing of the pixels of the images is the presence of depth information in pixels of images taken by the 3D-camera. The third image shows a better quality and accuracy compared to the first image and the second image as the ambient light component is substantially eliminated.

In one embodiment, the ambient light comprises a frequency different from light from the at least one light source. Therefore, the ambient light may be seen as interfering light that is not of the same frequency as light of the at least one light source. For example, the ambient light may at least be partially provided by daylight. As mentioned above, the ambient light may comprise daylight as well as further scattered light components. However, the ambient light may also be substantially fully provided by daylight. Thus, in summary, and as mentioned above, the frequency of the ambient light is different than the frequency of the light of the at least one light source. Still, however, it should be noted that additional ambient light is not necessarily required.

In a further embodiment, the method may comprise an additional step of deciding on maintenance or repair of the object based on the generated decoded third image. For example, the third image may manually or automatically be processed in order to decide whether or when a repair of the object may be conducted. For example, if a damage of the object is detected which may be considered critical, a repair of the damage may be conducted immediately, wherein if only a minor damage is detected which may not be considered critical, repair of this damage may be conducted at a later date as part of a routine inspection of the object. Consequently, the improved quality and accuracy of the third image may allow for an improved decision making.

According to another embodiment, when the object may be part of a train, a course of the train may be defined based on the decoded third image, for example, the train may not depart or may at least not depart with passengers again from a station when stopped. Therefore, the improved decision making may help to increase safety in passenger transportation. In addition, damage may be detected at an early stage, thus preventing possible train cancellations later on.

The above and other objects, features and advantages of the present invention will become more apparent from the following description when taken in conjunction with the accompanying drawings, in which a preferred embodiment of the present invention is shown by way of an illustrative example. In this context, all the features described and/or illustrated constitute, individually or in any combination, the subject-matter of the invention, irrespective of their summary in the claims or their references.
- Figure 1: shows a perspective view of an exemplary embodiment of a camera module which is opened;
- Figure 2: shows a sectional side view of the camera module of Fig. 1 when it is closed;
- Figure 3: shows a perspective view of the camera module of Fig. 2;
- Figure 4: shows a schematic perspective view of a light source provided inside the camera module shown in Figs. 1 to 3;
- Figure 5: shows a schematic exemplary interval control of a light source;
- Figure 6: schematically shows processing of a first image and a second image captured by a line scan camera thereby generating a decoded third image;
- Figure 7: schematically shows processing of a first image and a second image captured by a 3D-camera thereby generating a decoded third image;
- Figure 8: schematically shows two images of an object; and
- Figure 9: shows an effect of the inventive method by comparing two images generated with and without the use of the method.

In the figures, identical elements, identically acting elements, or elements of the same kind may be provided with the same reference numerals.

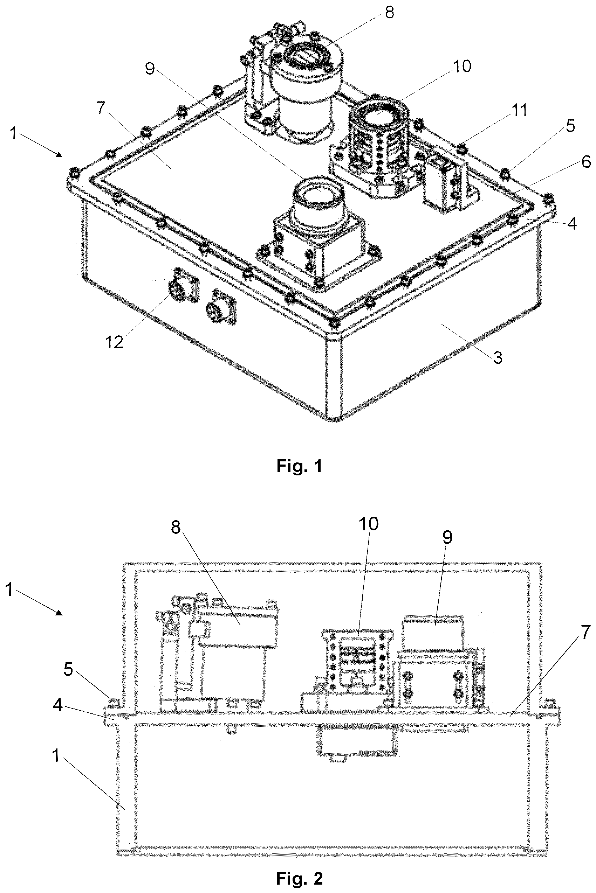

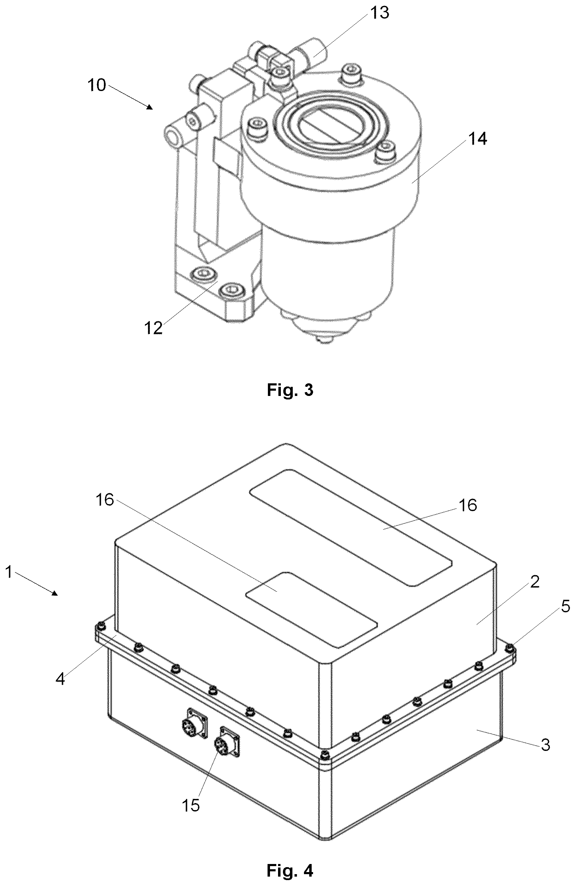

Fig. 1 shows an exemplary embodiment of an open camera module 1, i.e. of a camera module from which an upper housing part 2 (shown in Fig. 4) is removed. Thus, Fig. 1 only shows a lower housing part 3 comprising a flange portion 4 onto which the upper housing part 2 may be connected by bolts 5. Further, the camera module 1 comprises a sealing strip 6 arranged next to the flange portion 4 to seal the housing when the upper housing part 2 is connected to the lower housing part 3. Connection of the upper housing part 2 to the lower housing part 3 may be seen in Fig. 2.

Further, the camera module 1 comprises a plate 7, for example a circuit board assembly, providing a plane onto which cameras and light sources may be arranged. For example, in Fig. 1 a line scan camera 8 and a 3D-camera 9 are arranged on the plate 7. Further, two light sources 10 and 11, here laser light sources, are arranged on the plate 7, wherein a first light source 10 may be adjusted or calibrated with to respect to the line scan camera 8, and wherein a second light source 11 may be adjusted or calibrated with respect to the 3D-camera 9. In other words, light of the first light source 10 may be used to irradiate an object while capturing an image with the line scan camera 8, wherein light of the second light source 11 may be used to irradiate an object while capturing an image with the 3D-camera 9. Although the light sources 10 and 11 here are laser light sources, the light sources 10 and 11 could also be LEDs.

An exemplary first light source 10 is shown in Fig. 3. The light source 10 comprises a support structure 12 to be fixed to the plate 7, for example by bolts. Further, an adjustment knob 13 as well as an adjustment head 14 are provided to adjust the light source 10 with respect to the line scan camera 8. For example, the adjustment head 14 may allow to focus the laser.

In addition, the cameras 8 and 9 as well as the light sources 10 and 11 may be controlled by a control unit connected to the camera module 1 by connections 15. Furthermore, connections 15 may be used to send signals corresponding to image data output of an image sensor of the cameras 8 and 9 in order to be processed by a computing unit. The upper housing part 2 of the camera module 1 comprises two openings 16, for example two windows, so that images may be captured or taken while the housing of the camera module 1 is closed.

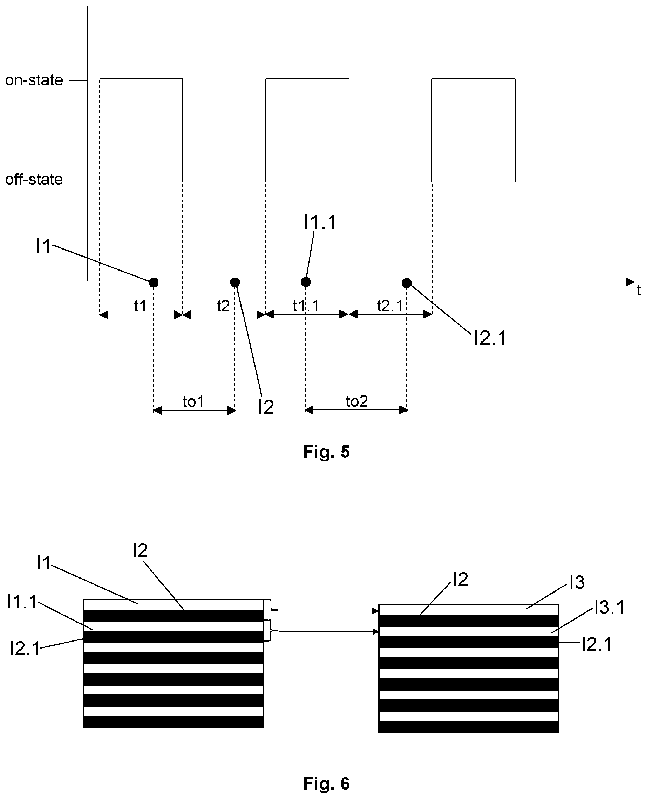

A schematical exemplary interval control of a light source is shown in Fig. 5. The light source which may be controlled may for example be light source 10. However, the interval control could also correspond to the light source 11. The light source 10 is configured to be switched between an on-state, in which the light source 10 emits light and thus may irradiate an object, and an off-state, in which the light source 10 emits no light. Hence, an object of which an image is to be captured may be irradiated by the light source 10 in the on-state but not in the off-state. The light sources 10 and 11 may be switched by a control signal.

As exemplary shown in Fig. 5, the light source is switched in the on-state during a first time interval t1 and in the off-state during a second time interval t1. Here, both time intervals t1 and t2 comprise a same duration. Each time interval shown here may comprise a duration of only a few microseconds (µs). A first image 11 is captured in the first time interval t1, when the light source 10 is in the on-state. A second image I2 is captured during the second time interval t2, when the light source 10 is in the off-state.

A time offset to1, for example a first time offset, between the first image 11, for example a first, first image, and the second image I2, for example a first, second image, indicates a timespan or duration between a point in time when the first image I1 is captured and a point in time when the second image I2 is captured. Further, a time offset to2, for example a second time offset, between a first image 11.1, for example a second, first image, and a second image I2.1, for example a second, second image, indicates a timespan or duration between a point in time when the first image I1.1 is captured and a point in time when the second image I2.1 is captured. Here, the time offsets to1 and to2 are different. However, the time offsets could also comprise the same length. The time offsets to1 and to2 may each be only a few µs.

The first time interval t1 is followed by the second time interval t2 which is again followed by a next first time interval t1.1 which is again followed by next second time interval t2.1. Further, time intervals may follow. In each first time interval t1 or t1.1 a first image I1 or 11.1 is captured. In each second time interval t2 or t2.1 a second image I2 or 12.1 is captured. Therefore, the first images I1 and 11.1 are captured when the light source 10 is switched on, wherein the second images I2 and 12.1 are captured when the light source 10 is switched off. Consequently, the first images I1 and I1.1 comprise an ambient light component Le as well as a light source component Lc, for example a laser-based or LED-based light source component, wherein the second images I2 and I2.1 only comprise an ambient light component Le'. As aforementioned, the ambient light components Le and Le' may be at least substantially identical, especially when the time offset to1 or to2 between the images are short.

A computing unit may thus process the first image I1 of the first time interval t1 with the second image I2 of the consecutive second time interval t2 in order to generate a third image I3. Likewise, the computing unit may process the first image 11.1 of the first time interval t1.1 with the second image 12.1 of the consecutive second time interval t2.1 in order to generate a third image 13.1.

In Fig. 6, a schematic exemplary processing is shown for a line scan camera 8, wherein the first image I1 corresponds to a first line, which is here an upper line of a complete image before processing, and the second image I2 before processing corresponds to a second line, which is here a line below the upper line of the complete image before processing. An arrow indicates the processing of the two images I1 and I2 or 11.1 and 12.1 respectively by the computing unit to generate the third image I3 or 13.1. As explained above, this involves at least substantially eliminating an ambient light component Le of the first image I1 or I1.1 using an ambient light component Le' of the corresponding second image I2 or I2.1. The resulting third image I3 or 13.1 may thus at least substantially only comprise a light source component Lc. The resulting third image I3 or 13.1 may then replace the first image I1 or 11.1 of the complete image. In other words, the generated third image I3 or 13.1 may substitute the first image I1 or 11.1 of the complete image before processing in a complete image after processing.

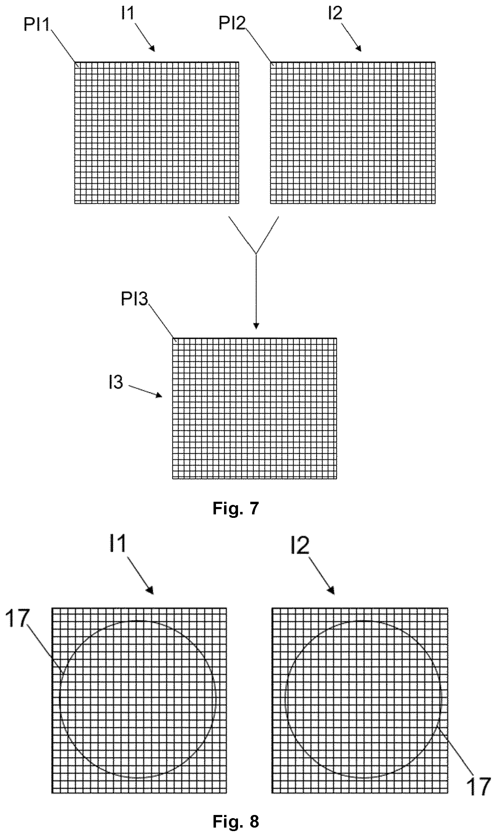

Fig. 7 shows another exemplary processing of a first image I1 and a second image I2 captured by a 3D-camera 9. Each image I1 and I2 comprises several pixels, wherein an upper left pixel of the first image I1 is indicated by PI1, and wherein an upper left pixel of the second image I2 is indicated by PI2. Both pixels PI1 and PI2 may thus correspond to the same position of the respective image I1 or I2. However, pixel PI1 relates to a different exposure to light than pixel PI2. To be more precise, the first image I1 was captured when a light source was switched on, wherein the second image I2 was captured when a light source was switched off. Both images I1 and I2, however, comprise an ambient light component Le or Le', respectively. During processing the ambient light component Le of the first image I1 is at least substantially eliminated by the ambient light component Le' of the second image I2. In this regard, the ambient light component of pixel PI1 may be eliminated, or at least substantially eliminated by the ambient light component of pixel PI2. The processing results in a pixel PI3 of the third image I3 which essentially does not comprise an ambient light component. Pixel PI3 is located at the same position as pixels PI1 and PI2 used for processing. Consequently, processing the images I1 and I2 allows to eliminate image differences, thereby generating the third image I3 which comprises a better quality and accuracy.

In Fig. 8 two images, a first image I1 and a second image I2, of an object 17 are shown. The object 17 here is a circle. A grid is intended to schematically illustrate the pixels. It can be seen that a left portion of the object in the second image I2 is in a second column of the grid, wherein this portion of the object is right at a line marking boundaries of the first column and second column in the first image, i.e. this portion of the object is some-how between the first column and the second column in the first image. Hence, an image offset between the first image I1 and the second image I2 in this schematical illustration is not more than one pixel. In other words, the image offset between the first image of the object and the second image of the object is within one pixel.

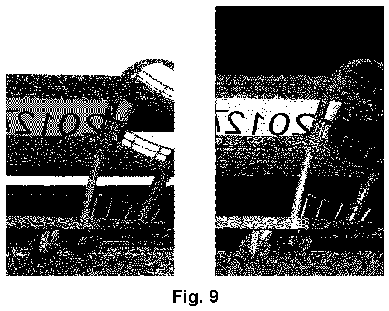

The effect of the processing is shown in Fig. 9, wherein an image of an object generated without the inventive method is shown on the left, and wherein another image of the same object generated with the inventive method is shown on the right. For example, as can be seen the overexposure in the upper part of the left image was eliminated. In addition, contours of the object in the right image are sharper and may be identified more easily. Inspection of the right image is therefore significantly improved due to the improved quality and accuracy of the image.

The method of the invention may thus also be used to capture images of a part of a train in an outdoor environment with an improved quality and accuracy. Consequently, a decision to repair or not to repair a part of the train may thus be improved.

### Reference numerals:

- 1: camera module
- 2: upper housing part
- 3: lower housing part
- 4: flange portion
- 5: bolt
- 6: sealing strip
- 7: plate
- 8: line scan camera
- 9: 3D-camera
- 10: first light source
- 11: second light source
- 12: support structure
- 13: adjustment knob
- 14: adjustment head
- 15: connection
- 16: opening
- 17: object

- t1, t1.1: first time interval
- t2, t2.1: second time interval
- to1, to2: time offset

- I1, I1.1: first image
- I2, I2.1: second image
- I3, I3.1: third image

- PI1: pixel of the first image
- PI2: pixel of the second image
- PI3: pixel of the third image

## Claims

1. Method for relative control of at least one interval-controlled light source (10, 11) and at least one camera (8, 9) together forming a camera module (1),
wherein the method comprises the following steps:
• exposing an object to ambient light;
• switching the at least one light source (10, 11) in an on-state for a first time interval (t1, t1.1) in which the at least one light source (10, 11) emits light onto the object;
• capturing a first image (11, 11.1) of the object by the at least one camera (8, 9), wherein the first image (11, 11.1) is captured in the first time interval (t1, t1.1) in which the object is exposed to the light of the light source (10, 11) and ambient light,
• switching the at least one light source (10, 11) in an off-state for a second time interval (t2, t2.1) in which the at least one light source (10, 11) emits no light onto the object;
• capturing a second image (I2, I2.1) of the object by the at least one camera (8, 9), wherein the second image (I2, 12.1) is captured in the second time interval (t2, t2.1) in which the object is exposed to ambient light only,
• processing the first image (11, 11.1) and the second image (I2, 12.1) by a computing unit thereby generating a decoded third image (I3, 13.1).

2. Method according to claim 1, wherein the at least one light source is a laser light source or an LED.

3. Method according to any one of the preceding claims, wherein the first time interval (t1, t1.1) and the second time interval (t2, t2.1) are consecutive.

4. Method according to any one of the preceding claims, wherein a time offset (to1, to2) between the first image (11, 11.1) and the second image (I2, 12.1) is determined such that an image offset between the first image (11, I1.1) of the object and the second image (I2, 12.1) of the object is within one pixel.

5. Method according to any one of the preceding claims, wherein a first time offset (to1) defining a duration between a first, first image (11) and a first, second image (I2) comprises the same duration as a second time offset (to2) defining a duration between a second, first image (11.1) and a second, second image (12.1).

6. Method according to any one of the preceding claims, wherein the camera module (1) comprises a 2D-camera, for example a line scan camera (8), and/or a 3D-camera (9), wherein a corresponding light source (10, 11) is provided for each camera (8, 9), wherein each camera is configured to capture one first image in the first time interval (t1, t1.1) and one second image in the second time interval (t2, t2.1), and wherein processing of the first image and the second image captured by the respective camera is performed by the computing unit.

7. Method according to any one of the preceding claims, wherein the object is part of a train moving past the camera module (1) at a speed of about 100 km/h at its maximum.

8. Method according to any one of the preceding claims, wherein the step of processing the first image (I1, I1.1) and the second image (I2, 12.1) by the computing unit to generate the decoded third image (I3, 13.1) comprises at least partially eliminating light components of the first image by an ambient light component of the second image, and wherein the light components of the first image comprise light from the at least one light source (10, 11) and ambient light.

9. Method according to claim 8, wherein when processing the first image (11, 11.1) and the second image (I2, 12.1) of the line scan camera (8) is performed by the computing unit, wherein the first image corresponds to a first line and the second image corresponds to a second line, elimination of the light components is performed between the two lines captured in succession.

10. Method according to claim 8, wherein when processing the first image (11) and the second image (I2) of the 3D-camera (9) is performed by the computing unit, elimination of the light components is performed between two equally positioned pixels (PI1, PI2) of the first image (11) and the second image (I2).

11. Method according to any one of the preceding claims, wherein the ambient light comprises a frequency different from light from the at least one light source.
